# EUROPEAN PATENT SPECIFICATION

(11) **EP 3 636 677 B1**
(45) Date of publication and mention of the grant of the patent: **22.11.2023**
(21) Application number: 18809701.8
(22) Date of filing: 10.04.2018
(51) Int. Cl.: C08F 8/42, C08G 18/69, C08G 77/38, C08G 77/42, C08G 77/50, C08G 81/00

(54) **ORGANIC SILICON COMPOUND-MODIFIED COPOLYMER AND URETHANE COMPOSITION INCLUDING SAME**
MIT ORGANISCHER SILICIUMVERBINDUNG MODIFIZIERTES COPOLYMER UND URETHANZUSAMMENSETZUNG DAMIT
COPOLYMÈRE MODIFIÉ PAR UN COMPOSÉ DE SILICIUM ORGANIQUE ET COMPOSITION D'URÉTHANE LE COMPRENANT

(30) Priority: 29.05.2017 JP 2017105270
(43) Date of publication of application: 15.04.2020
(73) Proprietor: Shin-Etsu Chemical Co., Ltd., Tokyo 100-0004 (JP)
(72) Inventor: HIROKAMI Munenao, Annaka-shi, Gunma 379-0224 (JP); ANDO Yuji, Annaka-shi, Gunma 379-0224 (JP)
(74) Representative: Mewburn Ellis LLP
(86) International application number: PCT/JP2018/015009
(87) International publication number: WO 2018/221020

(56) References cited:
- JP-A- H11 106 703
- JP-B2- S5 519 250
- JP-B2- S5 523 579

## Description

### TECHNICAL FIELD

The present invention relates to a urethane composition including an organic silicon compound-modified copolymer and a method of producing such copolymer, and more specifically, relates to a urethane composition including a specific organic silicon compound-modified copolymer including a polybutadiene skeleton, a polysiloxane skeleton and a hydroxyl group at at least one end.

### BACKGROUND ART

Among urethane compositions, a urethane composition incorporating a carbinol-modified polysiloxane has been conventionally proposed (see Patent Documents 1 and 2). By containing polysiloxane, the water repellency on the surface of a cured product can be exhibited.

However, the conventional carbinol-modified polysiloxane has very poor compatibility with alcohol compounds and isocyanate compounds, compounds which are incorporated in the urethane composition, and mixing them uniformly is difficult.

Also, a cured product of urethane obtained by curing a urethane composition incorporating a conventional carbinol-modified polysiloxane has high moisture permeability, and has a problem of easily causing deterioration of the substrate and peeling of the cured product film due to moisture when the cured product is used as a paint or a protective film.

Patent Documents 3 and 4 both disclose a curable polybutadiene composition comprising a silicone-modified polybutadiene-styrene copolymer blocked with an isocyanate group through urethane bond, prepared from pentamethyl hydrogen disiloxane.

### PRIOR ART DOCUMENTS

### PATENT DOCUMENTS

Patent Document 1: JP-B H07-33427
Patent Document 2: JP-B H07-53789
Patent Document 3: JP-B S5523579
Patent Document 4: JP-B S5519250

### SUMMARY OF THE INVENTION

### TECHNICAL PROBLEM

The present invention has been made in consideration of the above circumstances, and an object is to provide a urethane composition including an organic silicon compound-modified copolymer that has excellent compatibility with alcohol compounds and isocyanate compounds and also gives a cured product having excellent water repellency and moisture resistance.

### SOLUTION TO THE PROBLEM

As a result of intensive studies to solve the above-mentioned problems, the present inventors have found that a specific organic silicon compound-modified copolymer including a polybutadiene skeleton, a polysiloxane skeleton and a hydroxyl group at at least one end has excellent compatibility with alcohol compounds and isocyanate compounds and also gives a cured product having excellent water repellency and moisture resistance, thereby completing the present invention.

That is, the present invention provides a urethane composition comprising an organic silicon compound-modified copolymer, and the method of producing the organic silicon compound-modified copolymer, as defined in the claims.

### ADVANTAGEOUS EFFECTS OF THE INVENTION

The organic silicon compound-modified copolymer comprised in the urethane composition of the present invention has good compatibility with alcohol compounds and isocyanate compounds, and the urethane composition of the present invention including the organic silicon compound-modified copolymer is capable of giving a cured product having excellent water repellency and moisture resistance.

### DESCRIPTION OF EMBODIMENTS

Hereinafter, the present invention is specifically described.

The organic silicon compound-modified copolymer comprised in the urethane composition of the present invention includes a structural unit represented by formula (1) below; a structural unit represented by formula (2) below; and a hydroxyl group at at least one end: 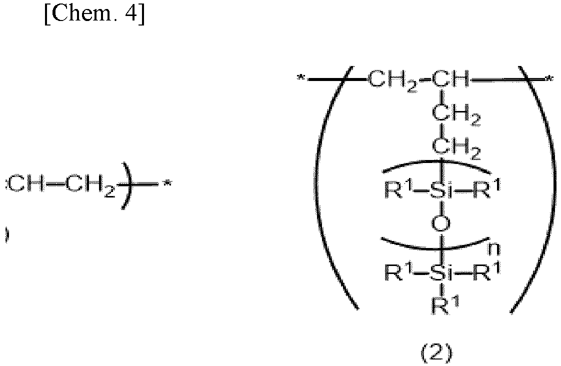 wherein asterisk * is a bond to an adjacent structural unit.

In formula (2), R¹ is each independently a C₁-C₁₀ alkyl group or C₆-C₁₀ aryl group.

The C₁-C₁₀ alkyl group can be linear, cyclic or branched, and specific examples thereof include methyl, ethyl, n-propyl, i-propyl, n-butyl, s-butyl, t-butyl, n-pentyl, n-hexyl, n-heptyl, n-octyl, n-nonyl, n-decyl, cyclopropyl, cyclobutyl, cyclopentyl, cyclohexyl, cycloheptyl, and cyclooctyl groups.

Specific examples of the C₆-C₁₀ aryl group include phenyl, α-naphthyl, and β-naphthyl groups.

Among these, as R¹, a linear alkyl group is preferable, and methyl group, ethyl group, and n-butyl group are more preferable.

In formula (2) above, though n is an integer of 4 or more, an integer of 8 or more is more preferable considering further increasing the water repellency of the obtained cured product. Though the upper limit is not particularly limited, 100 or less is preferable.

Though the molecular weight of the organic silicon compound-modified copolymer is not particularly limited, the organic silicon compound-modified copolymer preferably has a number average molecular weight of 1,000 or more, and more preferably 1,200 or more.

The number average molecular weight is a polystyrene-equivalent number average molecular weight obtained by gel permeation chromatography (GPC).

In the organic silicon compound-modified copolymer, the total number of the structural units represented by formula (1) and formula (2) above preferably constitutes 30 mol% or more, more preferably 50 mol% or more, and still more preferably 80 mol% or more of all units that constitute the copolymer.

In particular, considering improving compatibility with alcohol compounds and isocyanate compounds and reducing moisture permeability of the cured product, the structural units having the polybutadiene skeleton represented by formula (1) preferably constitute 10% by weight or more, and more preferably 40% by weight or more of all units that constitute the organic silicon compound-modified copolymer.

Further, considering further increasing the water repellency of the cured product, the number of the structural unit having a polysiloxane skeleton represented by formula (2) preferably constitute 5% by weight or more, and more preferably 10% by weight or more.

The organic silicon compound-modified copolymer can include, in addition to structural units of formula (1) and structural units of formula (2) above, structural units of formula (3) below and structural units of formula (5), and the arrangement of each structural unit is arbitrary: 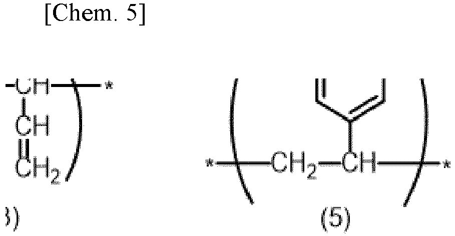 wherein asterisk * has the same meaning as above.

Though the organic silicon compound-modified copolymer includes at least one hydroxyl group per molecule at the end on average, the organic silicon compound-modified copolymer preferably includes 1.5 or more hydroxyl groups at the end per molecule on average, and more preferably includes two or more hydroxyl groups at the end per molecule on average.

The organic silicon compound-modified copolymer described above is obtained by hydrosilylating a polybutadiene compound including a structural unit of formula (1), a structural unit of formula (3), and a hydroxyl group at at least one end with a silicone compound of formula (4) in presence of a platinum compound-containing catalyst: 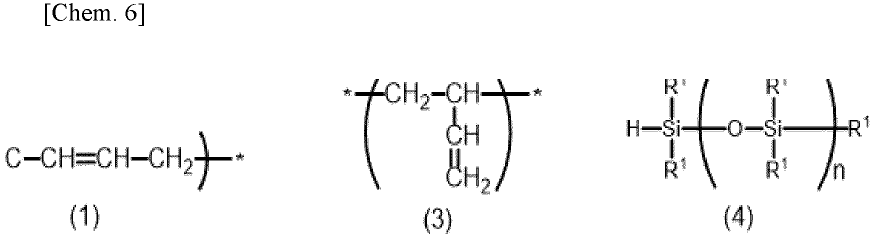 wherein asterisk *, R¹ and n have the same meanings as above.

Examples of polybutadiene compounds including the structural unit of formula (1), a structural unit of formula (3), and a hydroxyl group at at least one end include butadiene homopolymer, butadiene/styrene copolymer, and butadiene/isoprene copolymer, and these are also commercially available. For example, as a butadiene homopolymer, Poly bd R-15HT (manufactured by Idemitsu Kosan Co., Ltd.), Poly bd R-45HTLO, Poly bd R-20LM, Poly bd 605E, Krasol LBH 2000, Krasol LBH-P 2000, Krasol LBH 3000, Krasol LBH-P 3000 (those above are manufactured by CRAY VALLEY) are newly available.

Meanwhile, the silicone compound of formula (4) is not particularly limited as long as it has a Si-H group at one end, and specific examples thereof include the silicone compounds of formulas (6) to (11): 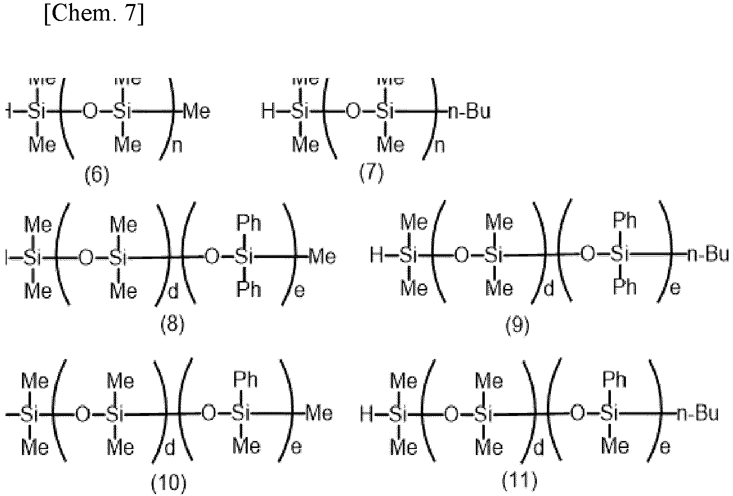 wherein while n has the same meaning as above, an integer of 8 to 100 is preferable, and d is an integer of 1 or more, e is an integer of 1 or more, and d + e = n, provided that the order of the repeating units is arbitrary in formulas (6) to (11).

The platinum compound-containing catalyst used in the hydrosilylation reaction is not particularly limited, and specific examples thereof include platinic chloride, an alcohol solution of platinic chloride, platinum-1,3-divinyl-1,1,3,3-tetramethyldisiloxane complex in toluene or xylene, tetrakistriphenylphosphine platinum, dichlorobistriphenylphosphine platinum, dichlorobisacetonitrile platinum, dichlorobisbenzonitrile platinum, dichlorocyclooctadiene platinum, and supported catalysts such as a platinum-carbon catalyst, a platinum-alumina catalyst and a platinum-silica catalyst.

From the viewpoint of selectivity during hydrosilylation, a zero-valent platinum complex is preferable, and a platinum-1,3-divinyl-1,1,3,3-tetramethyldisiloxane complex in toluene or xylene is more preferable.

Though the amount used of the platinum compound-containing catalyst is not particularly limited, from the viewpoint of reactivity and productivity, it is preferably 0.1 to 100 ppm (as a platinum amount) per the total weight of the polybutadiene compound including the structural unit represented by formula (1), the structural unit represented by formula (3), and a hydroxyl group at at least one end, and the silicone compound represented by formula (4).

Though the above-mentioned reaction proceeds even without a solvent, a solvent can be used.

Specific examples of the solvent that can be used include hydrocarbon solvents such as pentane, hexane, cyclohexane, heptane, isooctane, benzene, toluene, and xylene; ether solvents such as diethyl ether, tetrahydrofuran, and dioxane; ester solvents such as ethyl acetate and butyl acetate; aprotic polar solvents such as N, N-dimethylformamide; and chlorinated hydrocarbon solvents such as dichloromethane and chloroform, and these solvents can be used alone or in combination of two or more types.

The reaction temperature in the hydrosilylation reaction is not particularly limited, the reaction can be performed from 0°C with heating, but the temperature is preferably 0 to 200°C.

To obtain a moderate reaction rate, the reaction is preferably performed with heating. From such a viewpoint, the reaction temperature is more preferably 40 to 110°C, still more preferably 40 to 90°C.

The reaction time is not particularly limited, and is usually 1 to 60 hours, preferably 1 to 30 hours, and more preferably 1 to 20 hours.

The urethane composition of the present invention includes the above-mentioned organic silicon compound-modified copolymer.

Though the concentration of the organic silicon compound-modified copolymer contained in the urethane composition is not particularly limited, the concentration is preferably 1 to 95% by weight, more preferably 5 to 80% by weight, and still more preferably 10 to 70% by weight per the entire composition. When the concentration is within these ranges, the cured product of the urethane composition itself can have uniform and excellent water repellency and moisture resistance.

Further, the urethane composition can include a hydroxyl group-containing compound or an isocyanate group-containing compound.

The hydroxyl group-containing compound used in the present invention is not particularly limited as long as it is a hydroxyl group compound (polyol) having two or more hydroxyl groups in one molecule, and the hydroxyl group-containing compound can be appropriately selected from known compounds and used.

Examples of the polyol include low molecular weight polyols such as ethanediol, propanediol, 1,4-butanediol, 1,6-hexanediol, cyclohexyldimethanol, methylpropanediol, neopentylglycol, butylethylpropanediol, glycerin, trimethylolethane, trimethylolpropane, polycaprolactone triol, ditrimethylolpropane, pentaerythritol, polycaprolactone tetraol, dipentaerythritol, sorbitol, and mannitol; polyether polyols obtained by reacting an alkylene polyol such as ethylene glycol and propylene glycol with an alkylene oxide such as ethylene oxide and propylene oxide; polyester polyols obtained by reacting a polycarboxylic acid such as maleic acid and phthalic acid with an alkylene polyol such as ethylene glycol and propylene glycol; polycarbonate diols obtained by reacting an alkylene carbonate such as ethylene carbonate or trimethylene carbonate with an alkylene polyol such as ethylene glycol and 1,3-propanediol; homopolymers of a hydroxyl group-containing acrylic monomers such as 2-hydroxyethyl (meth)acrylate and hydroxypropyl (meth)acrylate, and copolymers with a radically polymerizable unsaturated monomer such as acrylic acid or styrene. These can be used alone or in combination of two or more types.

As the isocyanate group-containing compound, conventionally known ones can be used, and examples thereof include toluene-2,4-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate-diphenyl ether, methylene diisocyanate, 4,4'-methylenebis (phenyl isocyanate), durylene diisocyanate, 1,5-naphthalene diisocyanate, benzidine diisocyanate, o-nitrobenzidine diisocyanate, 4,4'-diisocyanate dibenzyl, 1,4-tetramethylene diisocyanate, 1,6-tetramethylene diisocyanate, 1,10-decamethylene diisocyanate, 1,4-cyclohexylene diisocyanate, xylylene diisocyanate, 4,4'-methylenebis (cyclohexyl isocyanate), and 1,5-tetrahydronaphthalene diisocyanate.

In the present invention, the isocyanate group and the hydroxyl group are preferably incorporated so that the equivalent ratio of the isocyanate group to the hydroxyl group (NCO/OH) in the urethane composition will be 0.25 to 5.0, more preferably in the range of 0.5 to 3.0, and still more preferably 0.8 to 2.0. When the amounts incorporated are in such a range, the crosslink density of the cured product is increased, and for example, durability can be imparted to the cured product.

Meanwhile, when the amount of the polyisocyanate incorporated is less than 0.25, a part of hydroxyl groups in the polyol remains without being reacted, which may result in the deterioration of the durability of the cured product such as moisture resistance and weatherability. Meanwhile, when the amount of the polyisocyanate incorporated is more than 5.0, the isocyanate group in polyisocyanate remains without being reacted, which may also result in the deterioration of the durability such as moisture resistance and weatherability. In this specification, the equivalent ratio of the isocyanate group in polyisocyanate to the hydroxyl group in polyol (NCO/OH) refers to the ratio of the total number of NCO groups in polyisocyanate to the total number of OH groups in polyol contained in the curable composition.

For example, to adjust the solids content in the urethane composition, dilution with a diluting solvent can be performed.

As the diluting solvent, an alcohol solvent, a carboxylic acid ester solvent, a ketone solvent, an amide solvent, an ether solvent, or aliphatic and aromatic hydrocarbon organic solvents are used.

Examples of the alcohol solvent include methanol, isopropyl alcohol, n-butanol, diacetone alcohol, 2-methoxyethanol (methyl cellosolve), 2-ethoxyethanol (ethyl cellosolve), 2-butoxyethanol (butyl cellosolve), and tertiary amyl alcohol; examples of the carboxylic acid ester solvent include ethyl acetate, n-propyl acetate, butyl acetate, and butyl formate; examples of the ketone solvent include methyl ethyl ketone, methyl isobutyl ketone, acetone, and cyclohexanone; examples of the amide solvent include dimethylformamide and dimethylacetamide; examples of the ether solvent include diethyl ether, methoxytoluene, 1,2-dimethoxyethane, 1,2-dibutoxyethane, 1,1-dimethoxymethane, 1,1-dimethoxyethane, 1,4-dioxane, and tetrahydrofuran; and examples of the aliphatic and aromatic hydrocarbon solvents include hexane, pentanexylene, toluene, and benzene. These organic solvents can be used alone or in combination of two or more types.

In addition to the components described above, various additives can be added to the urethane composition of the present invention. Examples of the additive include a curing catalyst, a metal oxide, a resin, a dye, a pigment, an ultraviolet absorber, and an antioxidant, and specific examples thereof include silica gel, titania sol, and alumina sol.

### EXAMPLES

Hereinafter, though the present invention is more specifically described by way of Examples and Comparative Examples, the present invention is not limited to these Examples.

In the following, "parts" means parts by weight. Molecular weight is a polystyrene-equivalent number average molecular weight determined by GPC measurement. Viscosity is a value at 25°C, measured using a rotational viscometer.

### [1] PRODUCTION OF ORGANIC SILICON COMPOUND-MODIFIED COPOLYMER

### Example 1-1 Production of organic silicon compound-modified copolymer A

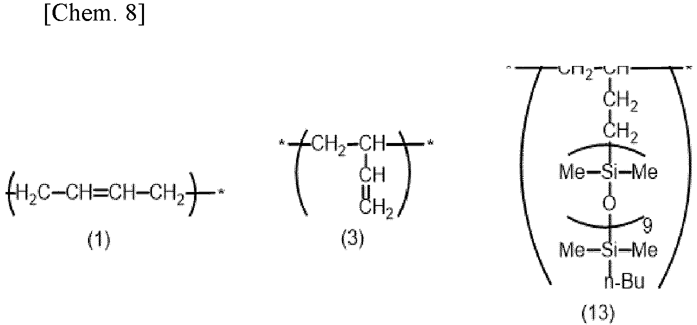

wherein asterisk * has the same meaning as above.

Into a 1 L separable flask equipped with a stirrer, a reflux condenser, a dropping funnel, and a thermometer, 400 g of Poly bd R-15HT (manufactured by Idemitsu Kosan Co., Ltd., the number average molecular weight of 1,200, composed of structural units of formulas (1) and (3) above, (1)/(3) = 80/20 (molar ratio, the same applies hereinafter), OH value of 100 mg KOH/g, the number of hydroxyl groups per molecule of 2.2, the same applies hereinafter), 100 g of a silicone compound represented by formula (12) below, 300 g of toluene, and platinum-1,3-divinyl-1,1,3,3-tetramethyldisiloxane complex in toluene (5 ppm in terms of platinum atoms) are added and stirred at 100°C for 8 hours. It was confirmed by ¹H-NMR measurement that the Si-H group had disappeared. Then, the resulting product was subjected to distillation under reduced pressure and filtration to obtain a pale yellow and slightly turbid liquid. The number average molecular weight was 1,500, and it was suggested from this number average molecular weight that the obtained silicone compound was an organic silicon compound-modified copolymer A composed of units represented by formulas (1), (3) and (13) above. The OH value was 80 mg KOH/g, and the number of the hydroxyl group per molecule was 2.2.

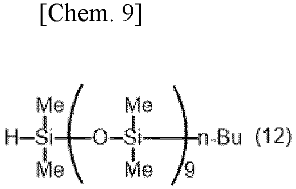

### Example 1-2 Production of organic silicon compound-modified copolymer B

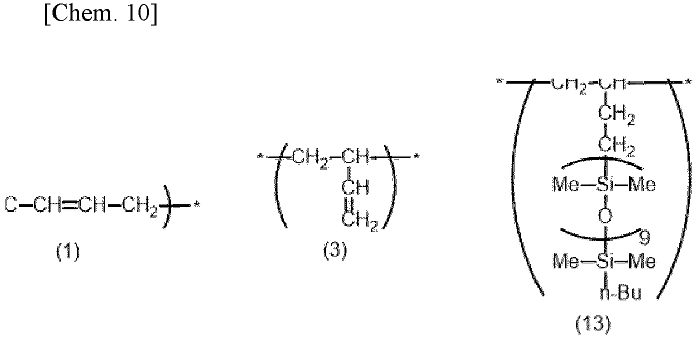

wherein asterisk * has the same meaning as above.

Into a 1 L separable flask equipped with a stirrer, a reflux condenser, a dropping funnel, and a thermometer, 250 g of Poly bd R-15HT, 250 g of a silicone compound represented by formula (12) above, 300 g of toluene, and platinum-1,3-divinyl-1,1,3,3-tetramethyldisiloxane complex in toluene (5 ppm in terms of platinum atoms) are added and stirred at 100°C for 8 hours. It was confirmed by ¹H-NMR measurement that the Si-H group had disappeared. Then, the resulting product was subjected to distillation under reduced pressure and filtration to obtain a pale yellow and slightly turbid liquid. The number average molecular weight was 2,400, and it was suggested from this number average molecular weight that the obtained silicone compound was an organic silicon compound-modified copolymer B composed of units represented by formulas (1), (3) and (13) above. The OH value was 50 mg KOH/g, and the number of the hydroxyl group per molecule was 2.2.

### Example 1-3 Production of organic silicon compound-modified copolymer C

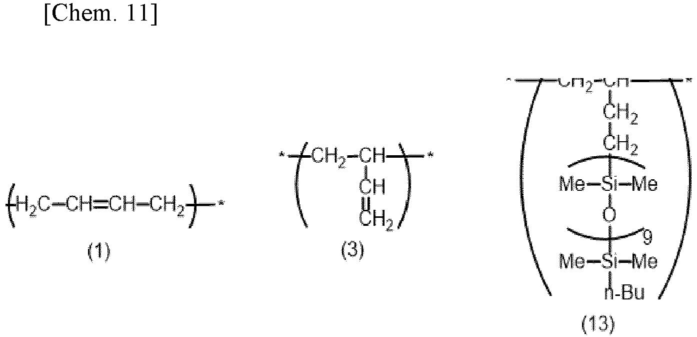

wherein asterisk * has the same meaning as as above.

Into a 1 L separable flask equipped with a stirrer, a reflux condenser, a dropping funnel, and a thermometer, 150 g of Poly bd R-15HT, 350 g of a silicone compound represented by formula (12) above, 300 g of toluene, and platinum-1,3-divinyl-1,1,3,3-tetramethyldisiloxane complex in toluene (5 ppm in terms of platinum atoms) are added and stirred at 100°C for 8 hours. It was confirmed by ¹H-NMR measurement that the Si-H group had disappeared. Then, the resulting product was subjected to distillation under reduced pressure and filtration to obtain a pale yellow and slightly turbid liquid. The number average molecular weight was 4,000, and it was suggested from this number average molecular weight that the obtained silicone compound was an organic silicon compound-modified copolymer C composed of units represented by formulas (1), (3) and (13) above. The OH value was 30 mg KOH/g, and the number of the hydroxyl group per molecule was 2.2.

### Example 1-4 Production of organic silicon compound-modified copolymer D

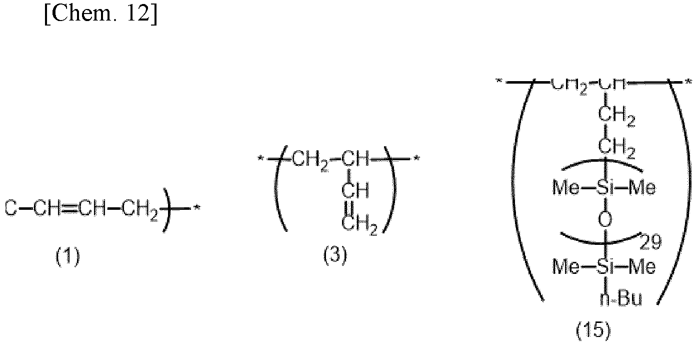

wherein asterisk * has the same meaning as above.

Into a 1 L separable flask equipped with a stirrer, a reflux condenser, a dropping funnel, and a thermometer, 400 g of Poly bd R-15HT, 100 g of a silicone compound represented by formula (14) below, 300 g of toluene, and platinum-1,3-divinyl-1,1,3,3-tetramethyldisiloxane complex in toluene (5 ppm in terms of platinum atoms) are added and stirred at 100°C for 8 hours. It was confirmed by ¹H-NMR measurement that the Si-H group had disappeared. Then, the resulting product was subjected to distillation under reduced pressure and filtration to obtain a pale yellow and slightly turbid liquid. The number average molecular weight was 1,500, and it was suggested from this number average molecular weight that the obtained silicone compound was an organic silicon compound-modified copolymer D composed of units represented by formulas (1), (3) and (15) above. The OH value was 80 mg KOH/g, and the number of the hydroxyl group per molecule was 2.2.

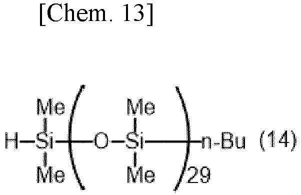

### Example 1-5 Production method of organic silicon compound-modified copolymer E

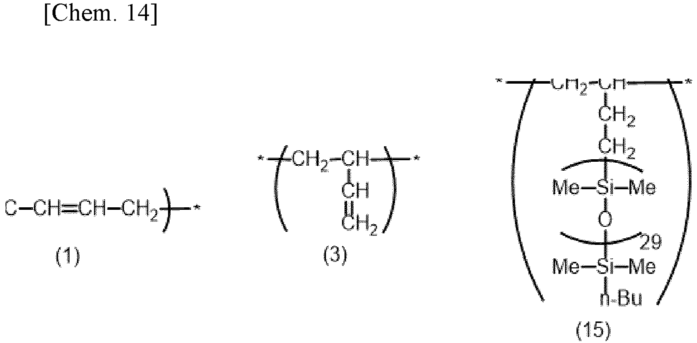

wherein asterisk * has the same meaning as above.

Into a 1 L separable flask equipped with a stirrer, a reflux condenser, a dropping funnel, and a thermometer, 250 g of Poly bd R-15HT, 250 g of a silicone compound represented by formula (14) above, 300 g of toluene, and platinum-1,3-divinyl-1,1,3,3-tetramethyldisiloxane complex in toluene (5 ppm in terms of platinum atoms) are added and stirred at 100°C for 8 hours. It was confirmed by ¹H-NMR measurement that the Si-H group had disappeared. Then, the resulting product was subjected to distillation under reduced pressure and filtration to obtain a pale yellow and slightly turbid liquid. The number average molecular weight was 2,400, and it was suggested from this number average molecular weight that the obtained silicone compound was an organic silicon compound-modified copolymer E composed of units represented by formulas (1), (3) and (15) above. The OH value was 50 mg KOH/g, and the number of the hydroxyl group per molecule was 2.2.

### Example 1-6 Production method of organic silicon compound-modified copolymer F

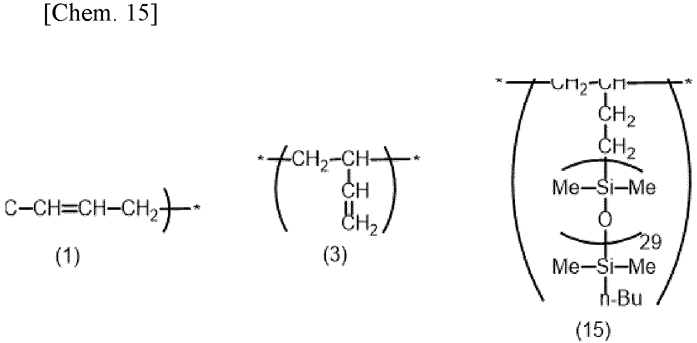

wherein asterisk * has the same meaning as above.

Into a 1 L separable flask equipped with a stirrer, a reflux condenser, a dropping funnel, and a thermometer, 150 g of Poly bd R-15HT, 350 g of a silicone compound represented by formula (14) above, 300 g of toluene, and platinum-1,3-divinyl-1,1,3,3-tetramethyldisiloxane complex in toluene (5 ppm in terms of platinum atoms) are added and stirred at 100°C for 8 hours. It was confirmed by ¹H-NMR measurement that the Si-H group had disappeared. Then, the resulting product was subjected to distillation under reduced pressure and filtration to obtain a pale yellow and slightly turbid liquid. The number average molecular weight was 4,000, and it was suggested from this number average molecular weight that the obtained silicone compound was an organic silicon compound-modified copolymer F composed of units represented by formulas (1), (3) and (15) above. The OH value was 30 mg KOH/g, and the number of the hydroxyl group per molecule was 2.2.

### Example 1-7 Production method of organic silicon compound-modified copolymer G

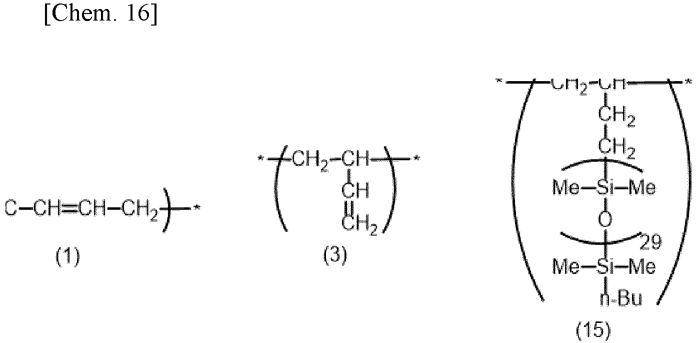

wherein asterisk * has the same meaning as above.

Into a 1 L separable flask equipped with a stirrer, a reflux condenser, a dropping funnel, and a thermometer, 400 g of Poly bd R-45HTLO (manufactured by CRAY VALLEY, the number average molecular weight of 2,800, composed of structural units of formulas (1) and (3) above, (1)/(3) = 80/20, OH value of 47 mg KOH/g, the number of hydroxyl groups per molecule of 2.4), 100 g of a silicone compound represented by formula (13) above, 300 g of toluene, and platinum-1,3-divinyl-1,1,3,3-tetramethyldisiloxane complex in toluene (5 ppm in terms of platinum atoms) are added and stirred at 100°C for 8 hours. It was confirmed by ¹H-NMR measurement that the Si-H group had disappeared. Then, the resulting product was subjected to distillation under reduced pressure and filtration to obtain a pale yellow and slightly turbid liquid. The number average molecular weight was 3,500, and it was suggested from this number average molecular weight that the obtained silicone compound was an organic silicon compound-modified copolymer G composed of units represented by formulas (1), (3) and (15) above. The OH value was 38 mg KOH/g, and the number of the hydroxyl group per molecule was 2.4.

### [2] CONFIRMATION OF COMPATIBILITY WITH COMPONENT CONSTITUTING URETHANE COMPOSITION

### Examples 2-1 to 2-7, Comparative Examples 2-1 and 2-2

The compatibility when each of 10 g of the organic silicon compound-modified copolymers A to G obtained above and the silicone compounds A and B below were mixed with 10 g of toluene-2,4-diisocyanate was confirmed and evaluated by the following criteria. The results are shown in Table 1.
○: Uniformly mixed after 1 week
△: Slightly separated after 1 week
×: Separated after 1 hour

**Table 1**

| | Hydroxyl group compound | Compatibility result |
|---|---|---|
| Example 2-1 | Organic silicon compound-modified copolymer A | ○ |
| Example 2-2 | Organic silicon compound-modified copolymer B | ○ |
| Example 2-3 | Organic silicon compound-modified copolymer C | △ |
| Example 2-4 | Organic silicon compound-modified copolymer D | ○ |
| Example 2-5 | Organic silicon compound-modified copolymer E | ○ |
| Example 2-6 | Organic silicon compound-modified copolymer F | △ |
| Example 2-7 | Organic silicon compound-modified copolymer G | ○ |
| Comparative Example 2-1 | Silicone compound A | × |
| Comparative Example 2-2 | Silicone compound B | × |

| | | |
|---|---|---|
| Silicone compound A: Dual-end type carbinol-modified silicone KF-6001 (Shin-Etsu Chemical Co., Ltd.) Silicone compound B: Dual-end type carbinol-modified silicone KF-6002 (Shin-Etsu Chemical Co., Ltd.) | | |

As shown in Table 1, it is found that the organic silicon compound-modified copolymers A to G obtained in Examples 1-1 to 1-7 exhibit high compatibility with the isocyanate compound.

### [3] PRODUCTION OF URETHANE COMPOSITION AND CURED PRODUCT

### Examples 3-1 to 3-7

The organic silicon compound-modified copolymers A to G obtained above and polymethylene polyphenyl polyisocyanate (manufactured by Mitsui Chemicals, Inc. COSMONATE 400) were mixed at NCO/OH (molar ratio) of 1.05, and additionally methyl ethyl ketone (MEK) and NEOSTANN U-830 (manufactured by NITTO KASEI Co., Ltd., dioctyltin dineodecanoate) were mixed as shown in Table 2. The mixed urethane composition (20 g) was poured into a 170 mm × 130 mm × 1 mm mold and cured at 25°C for 1 hour and at 100°C for 1 hour. The water contact angle and moisture vapor transmission rate of the obtained cured product were measured. The results are also shown in Table 2.

**Table 2**

| | | Example 3-1 | Example 3-2 | Example 3-3 | Example 3-4 | Example 3-5 | Example 3-6 | Example 3-7 |
|---|---|---|---|---|---|---|---|---|
| <Mixing ratio (parts by weight)> | | | | | | | | |
| Organic silicon compound-modified copolymer | A | 100 | | | | | | |
| | B | | 100 | | | | | |
| | C | | | 100 | | | | |
| | D | | | | 100 | | | |
| | E | | | | | 100 | | |
| | F | | | | | | 100 | |
| | G | | | | | | | 100 |
| COSMONATE 400 | | 20 | 13 | 7.6 | 20 | 13 | 7.6 | 10 |
| NEOSTANN U-830 | | 0.1 | 0.1 | 0.1 | 0.1 | 0.1 | 0.1 | 0.1 |
| MEK | | 120 | 113 | 108 | 120 | 113 | 108 | 110 |

| <Physical properties of cured product> | | | | | | | | |
|---|---|---|---|---|---|---|---|---|
| Water contact angle (°) | | 105 | 106 | 108 | 105 | 106 | 108 | 105 |
| Moisture vapor transmission rate (g/m²·day) | 25 | 60 | 80 | 25 | 60 | 80 | 25 | |

### Comparative Examples 3-1 to 3-2

The silicone compounds A and B above and polymethylene polyphenyl polyisocyanate (manufactured by Mitsui Chemicals, Inc., COSMONATE 400) were mixed at NCO/OH (molar ratio) of 1.05, and additionally MEK solvent and NEOSTANN U-830 were mixed as shown in Table 3. The mixed urethane composition (20 g) was poured into a 170 mm × 130 mm × 1 mm mold and cured at 25°C for 1 hour and at 100°C for 1 hour. The water contact angle and moisture vapor transmission rate of the obtained cured product were measured. The results are also shown in Table 3.

**Table 3**

| | Comparative Example 3-1 | Comparative Example 3-2 |
|---|---|---|
| <Mixing ratio (parts by weight)> | | |
| Silicone compound A | 100 | |
| Silicone compound B | | 100 |
| COSMONATE 400 | 16 | 8.9 |
| NEOSTANN U-830 | 0.1 | 0.1 |
| MEK | 116 | 109 |

| <Physical properties of cured product> | | |
|---|---|---|
| Water contact angle (°) | 105 | 105 |
| Moisture vapor transmission rate (g/m²·day) | 140 | 145 |

As shown in Tables 2 and 3, it is found that by using urethane compositions including the organic silicon compound-modified copolymers A to G obtained in Examples 1-1 to 1-7, cured products having excellent water repellency and moisture resistance can be obtained.

## Claims

1. A urethane composition comprising an organic silicon compound-modified copolymer which comprises structural unit of formula (1) below, structural unit of formula (2) below, and has hydroxyl group at at least one end: 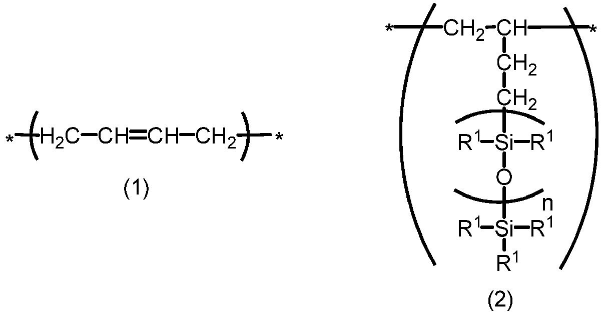 wherein asterisk * is a bond to an adjacent structural unit, each R¹ independently is a C₁-C₁₀ alkyl group or C₆-C₁₀ aryl group, and n is an integer of 4 or more.

2. A urethane composition of claim 1, wherein the organic silicon compound-modified copolymer has a number average molecular weight of 1,000 or more.

3. A urethane composition of claim 2 in which the organic silicon compound-modified copolymer includes on average 1.5 or more hydroxyl groups at the end per molecule.

4. A urethane composition of claim 3 in which, in the organic silicon compound-modified copolymer, structural units having the polybutadiene skeleton represented by formula (1) constitute 10% by weight or more of all units that constitute said copolymer, and structural units having a polysiloxane skeleton represented by formula (2) constitute 5% by weight or more.

5. A urethane composition of any of claims 2 to 4 wherein each R¹ independently is a linear alkyl group .

6. A urethane composition of any of the preceding claims wherein the organic silicon compound-modified copolymer further comprises structural units of formula (3) below and structural units of formula (5) below, and the arrangement of each structural unit is arbitrary: 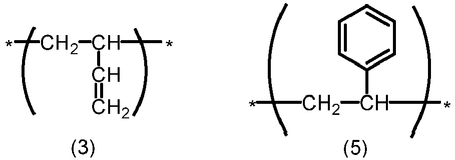 wherein asterisk * has the same meaning as above.

7. A urethane composition of any of claims 2 to 5 wherein the organic silicon compound-modified copolymer is contained in the urethane composition at from 1-95% by weight of the entire composition.

8. A urethane composition of any of claims 2 to 5 and 7 comprising isocyanate group-containing compound and polyol at an equivalent ratio of isocyanate group to hydroxyl group (NCO/OH) in the urethane composition of 0.25-5.0.

9. A method of producing an organic silicon compound-modified copolymer as defined in any of claims 1 to 8, comprising the step of hydrosilylating a polybutadiene compound including structural unit of formula (1) below, structural unit of formula (3) below, and a hydroxyl group at at least one end, with a silicone compound of formula (4) below in the presence of a platinum compound-containing catalyst: 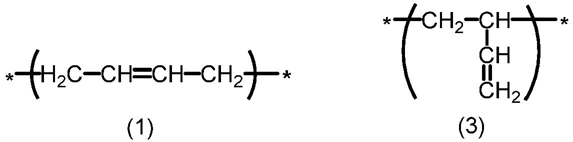 wherein asterisk * has the same meaning as above, 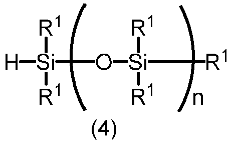 wherein R¹ and n have the same meaning as above.

10. A method of claim 9, wherein the silicone compound of formula (4) is selected from silicone compounds of formulae (6) to (11): 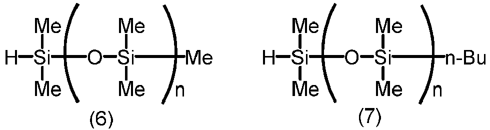 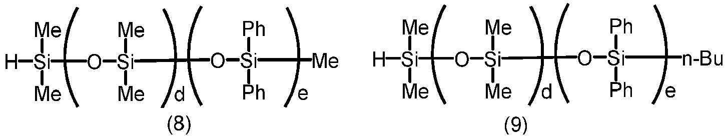 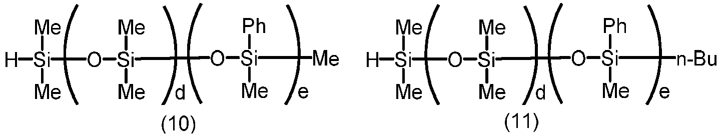 wherein n has the same meaning as above, d is an integer of 1 or more, e is an integer of 1 or more, and d + e = n, the order of the repeating units being arbitrary.

## Patentansprüche

1. Urethan-Zusammensetzung, die ein mit organischen Siliciumverbindungen modifiziertes Copolymer umfasst, das eine Struktureinheit der nachstehenden Formel (1), eine Struktureinheit der nachstehenden Formel (2) und eine Hydroxylgruppe an zumindest einem Ende aufweist: 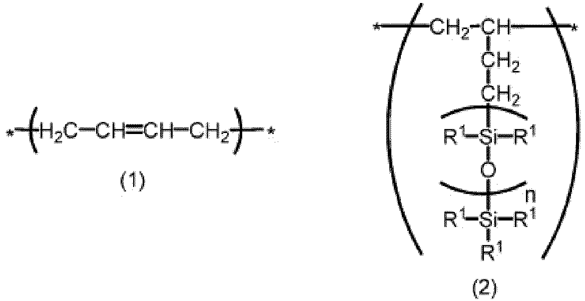 worin der Stern * eine Bindung an eine benachbarte Struktureinheit bezeichnet, die R¹ jeweils unabhängig eine C₁₋₁₀-Alkylgruppe oder eine C₆₋₁₀-Arylgruppe sind und n eine ganze Zahl von 4 oder mehr ist.

2. Urethan-Zusammensetzung nach Anspruch 1, wobei das mit organischen Siliciumverbindungen modifizierte Copolymer ein zahlenmittleres Molekulargewicht von 1.000 oder mehr aufweist.

3. Urethan-Zusammensetzung nach Anspruch 2, in der das mit organischen Siliciumverbindungen modifizierte Copolymer pro Molekül durchschnittlich 1,5 oder mehr Hydroxylgruppen am Ende umfasst.

4. Urethan-Zusammensetzung nach Anspruch 3, in der in dem mit organischen Siliciumverbindungen modifizierten Copolymer Struktureinheiten, die das durch Formel (1) dargestellte Polybutadien-Skelett aufweisen, 10 Gew.-% oder mehr aller Einheiten ausmachen, aus denen das Copolymer besteht, und Struktureinheiten, die ein durch Formel (2) dargestellte Polysiloxan-Skelett aufweisen, 5 Gew.-% oder mehr ausmachen.

5. Urethan-Zusammensetzung nach einem der Ansprüche 2 bis 4, wobei die R¹ jeweils unabhängig eine unverzweigte Alkylgruppe sind.

6. Urethan-Zusammensetzung nach einem der vorangegangenen Ansprüche, wobei das mit organischen Siliciumverbindungen modifizierte Copolymer weiters Struktureinheiten der nachstehenden Formel (3) und Struktureinheiten der nachstehenden Formel (5) umfasst, und wobei die Anordnung jeder Struktureinheit zufällig ist: 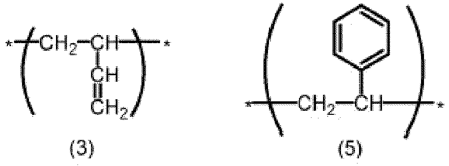 worin der Stern * dieselbe Bedeutung hat wie oben.

7. Urethan-Zusammensetzung nach einem der Ansprüche 2 bis 5, wobei das mit organischen Siliciumverbindungen modifizierte Copolymer in der Urethan-Zusammensetzung in einer Menge von 1 bis 95 Gew.-% der Gesamtzusammensetzung enthalten ist.

8. Urethan-Zusammensetzung nach einem der Ansprüche 2 bis 5 und 7, die eine eine Isocyanatgruppe enthaltende Verbindung und Polyol in einem Äquivalent-Verhältnis zwischen Isocyanatgruppen und Hydroxylgruppen (NCO/OH) in der Urethan-Zusammensetzung von 0,25 bis 5,0 umfasst.

9. Verfahren zur Herstellung eines mit organischen Siliciumverbindungen modifiziertes Copolymers wie in einem der Ansprüche 1 bis 8 definiert, das den Schritt des Hydrosilylierens einer Polybutadienverbindung, die Struktureinheiten der nachstehenden Formel (1), Struktureinheiten der nachstehenden Formel (3) und eine Hydroxylgruppe an zumindest einem Ende umfasst, mit einer Silikonverbindung der nachstehenden Formel (4) in Gegenwart eines eine Platinverbindung enthaltenden Katalysators umfasst: 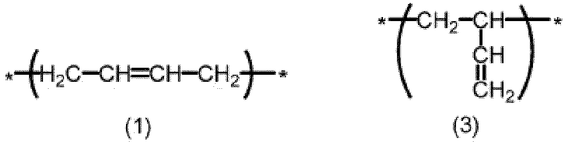 worin der Stern * dieselbe Bedeutung wie oben hat, 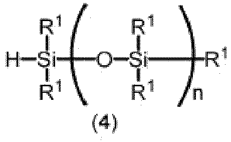 worin R¹ und n dieselbe Bedeutung wie oben haben.

10. Verfahren nach Anspruch 9, wobei die Silikonverbindung der Formel (4) aus Silikonverbindungen der Formeln (6) bis (11) ausgewählt ist: 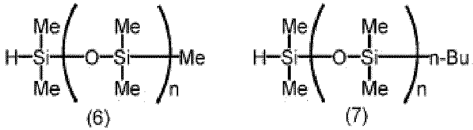 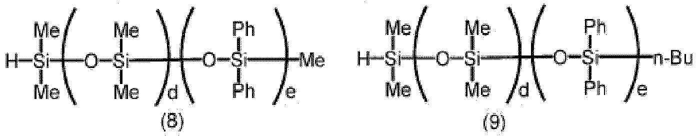 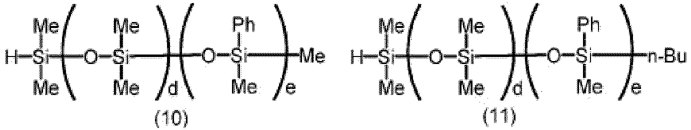 worin n dieselbe Bedeutung wie oben hat, d eine ganze Zahl von 1 oder mehr ist, e eine ganze Zahl von 1 oder mehr ist und gilt: d + e = n, wobei die Anordnung der Wiederholungseinheiten zufällig ist.

## Revendications

1. Composition d'uréthane comprenant un copolymère modifié par un composé de silicium organique qui comprend une unité structurelle de formule (1) ci-dessous, une unité structurelle de formule (2) ci-dessous, et présente un groupe hydroxyle à au moins une extrémité : 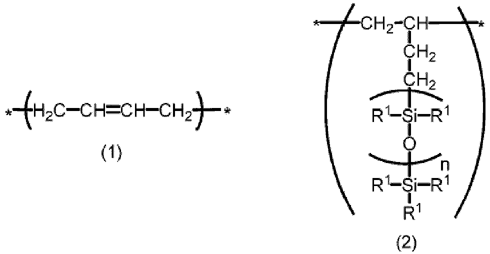 dans laquelle l'astérisque* est une liaison à une unité structurelle adjacente, chaque R¹ est indépendamment un groupe alkyle en C₁-C₁₀ ou un groupe aryle en C₆-C₁₀, et n est un nombre entier de 4 ou plus.

2. Composition d'uréthane selon la revendication 1, dans laquelle le copolymère modifié par un composé de silicium organique présente un poids moléculaire moyen en nombre de 1 000 ou plus.

3. Composition d'uréthane selon la revendication 2, dans laquelle le copolymère modifié par un composé de silicium organique inclut en moyenne 1,5 groupe hydroxyle ou plus à l'extrémité par molécule.

4. Composition d'uréthane selon la revendication 3, dans laquelle, dans le copolymère organique modifié par un composé de silicium, les unités structurelles présentant le squelette de polybutadiène représenté par la formule (1) constituent 10 % en poids ou plus de toutes les unités qui constituent ledit copolymère, et les unités structurelles présentant un squelette de polysiloxane représenté par la formule (2) constituent 5 % en poids ou plus.

5. Composition d'uréthane selon l'une quelconque des revendications 2 à 4, dans laquelle chaque R¹ est indépendamment un groupe alkyle linéaire.

6. Composition d'uréthane selon l'une quelconque des revendications précédentes, dans laquelle le copolymère modifié par un composé organique de silicium comprend en outre des unités structurelles de formule (3) ci-dessous et des unités structurelles de formule (5) ci-dessous, et la disposition de chaque unité structurelle est arbitraire : 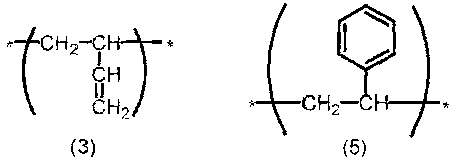 dans laquelle l'astérisque* a la même signification que ci-dessus.

7. Composition d'uréthane selon l'une quelconque des revendications 2 à 5, dans laquelle le copolymère modifié par un composé de silicium organique est contenu dans la composition d'uréthane à raison de 1 à 95 % en poids de la composition totale.

8. Composition d'uréthane selon l'une quelconque des revendications 2 à 5 et 7, comprenant un composé contenant un groupe isocyanate et un polyol à un rapport équivalent du groupe isocyanate au groupe hydroxyle (NCO/OH) dans la composition d'uréthane de 0,25 à 5,0.

9. Procédé de production d'un copolymère modifié par un composé organique de silicium tel que défini dans l'une quelconque des revendications 1 à 8, comprenant l'étape d'hydrosilylation d'un composé de polybutadiène incluant une unité structurelle de formule (1) ci-dessous, une unité structurelle de formule (3) ci-dessous et un groupe hydroxyle à au moins une extrémité, avec un composé de silicone de formule (4) ci-dessous en présence d'un catalyseur contenant un composé de platine : 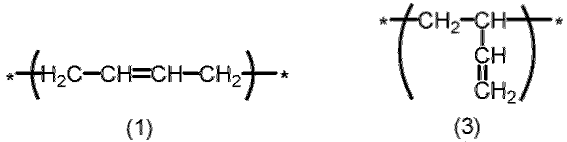 dans lequel l'astérisque* présente la même signification que ci-dessus, 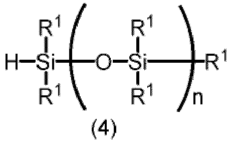 dans lequel R¹ et n présentent la même signification que ci-dessus.

10. Procédé selon la revendication 9, dans lequel le composé de silicone de formule (4) est choisi parmi les composés de silicone de formules (6) à (11) : 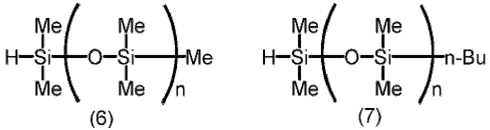 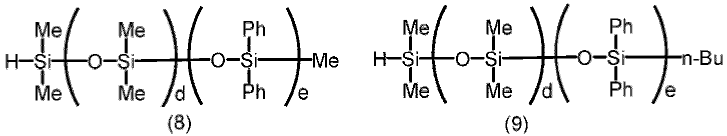 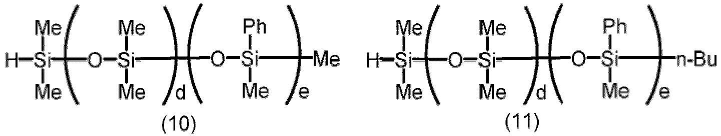 dans lequel n a la même signification que ci-dessus, d est un nombre entier de 1 ou plus, e est un nombre entier de 1 ou plus, et d + e = n, l'ordre des unités répétitives étant arbitraire.
